(19) Europäisches Patentamt
European Patent Office
Office européen des brevets

(11) **EP 0 956 468 B1**

(12) **EUROPÄISCHE PATENTSCHRIFT**

(45) Veröffentlichungstag und Bekanntmachung des Hinweises auf die Patenterteilung:
**22.05.2002   Patentblatt 2002/21**

(51) Int Cl.$^7$: **F16H 61/00**

(21) Anmeldenummer: **98904138.9**

(22) Anmeldetag: **24.01.1998**

(86) Internationale Anmeldenummer:
**PCT/EP98/00393**

(87) Internationale Veröffentlichungsnummer:
**WO 98/34054 (06.08.1998 Gazette 1998/31)**

(54) **EINRICHTUNG ZUM AUSWERTEN VON FAHRZEUG-, ANTRIEBS- UND BETRIEBSPARAMETERN UM EINE ÜBERSETZUNG EINES GETRIEBES ZU STEUERN**

SYSTEM FOR EVALUATING VEHICLE DRIVE AND OPERATION PARAMETERS FOR CONTROLLING THE RATIO OF A TRANSMISSION

SYSTEME D'EVALUATION DE PARAMETRES DE MECANISMES D'ENTRAINEMENT ET DE COMMANDE DE VEHICULES POUR COMMANDER LE RAPPORT D'UNE TRANSMISSION

(84) Benannte Vertragsstaaten:
**DE FR GB IT SE**

(30) Priorität: **31.01.1997   DE 19703561**

(43) Veröffentlichungstag der Anmeldung:
**17.11.1999   Patentblatt 1999/46**

(73) Patentinhaber: **ZF FRIEDRICHSHAFEN Aktiengesellschaft
88038 Friedrichshafen (DE)**

(72) Erfinder:
• **DOBLER, Siegfried
  D-88085 Langenargen (DE)**
• **MAYER, Karl
  D-88069 Tettnang (DE)**
• **WOLZ, Udo
  D-71111 Waldenbuch (DE)**

(56) Entgegenhaltungen:
**EP-A- 0 742 384          WO-A-86/05449
DE-A- 19 625 936**

• **NEUFFER K: "ELEKTRONISCHE GETRIEBESTEUERUNG VON BOSCH" ATZ AUTOMOBILTECHNISCHE ZEITSCHRIFT, Bd. 94, Nr. 9, 1.September 1992, Seiten 442-444, 446 - 449, XP000297448**

## Beschreibung

Die Erfindung betrifft eine Einrichtung zum Auswerten von Fahrzeug-, Antriebs- und Betriebsparametern mit den Merkmalen nach dem Oberbegriff von Anspruch 1, wie sie beispielsweise aus Neuffer, Kurt: "Elektronische Getriebesteuerung von Bosch", Automobiltechnische Zeitschrift ATZ, 94. Jahrgang, 1992, Heft 9, Seiten 442-449 bekannt ist.

Der Wunsch nach größerer Wirtschaftlichkeit bei sehr guter Fahrbarkeit verlangt, bei Kraftfahrzeugen die Fahrzeugbetriebsbedingungen besser den günstigsten Betriebsbereichen eines Antriebsmotors in seinem Kennfeld zuzuordnen. Dies wird durch vielstufige oder stufenlose Getriebe mit einem großen Übersetzungsbereich erreicht. Um die Vorteile ausnutzen zu können, muß das Getriebe optimal geschaltet bzw. verstellt werden, was hohe Anforderungen an den Fahrer stellt. Betrachtet man das stufenlose Getriebe als ein Getriebe mit unendlich vielen Stufen, können in der Regel die für Stufengetriebe geltenden Überlegungen auch auf stufenlose Getriebe analog übertragen werden. Aus Gründen der Einfachheit wird daher in den folgenden Ausführungen vornehmlich auf Stufengetriebe Bezug genommen und die hierzu passende Terminologie verwendet.

Um den Fahrer zu entlasten und den Fahrkomfort zu erhöhen, werden immer mehr Fahrzeuge angeboten, die einen vollautomatisierten Antriebsstrang haben, bestehend aus einem Motor, einem Anfahrelement, z. B. einer Kupplung und/oder einem Wandler, einem Getriebe mit verschiedenen Übersetzungen und einer Antriebsachse mit Rädern.

Ein Teil der Automatisierung besteht darin, für den jeweiligen Betriebszustand des Fahrzeugs eine günstige Übersetzung auszuwählen und den richtigen Schaltzeitpunkt zu bestimmen. Gleichzeitig soll berücksichtigt werden, daß die Wirtschaftlichkeit und der Fahrkomfort nicht durch zu häufiges Schalten beeinträchtigt werden.

Bekannte, selbsttätig schaltende Stufenwechselgetriebe für Kraftfahrzeuge werden vorrangig in Abhängigkeit von Drehzahlen, die der Fahrgeschwindigkeit proportional sind, und von Lastzuständen, z. B. der Stellung eines Fahrpedals oder Gaspedals bei Leerlauf, Teillast, Vollast oder Kickdown, selbsttätig im Bereich der zur Verfügung stehenden Gänge geschaltet. Um die Anzahl der Schaltungen zu reduzieren, kann der Fahrer über einen Wählschalter Gänge im oberen oder unteren Bereich von der Schaltfolge ausschließen, z.B. bei Bergfahrt oder im Winterbetrieb.

Es ist bekannt (De 33 37 930A) die Anzahl der Gänge nicht nur im oberen Bereich, sondern auch gleichzeitig im unteren Bereich durch einen weiteren Wählhebel vom automatischen Schalten auszuschließen. Dies ist besonders günstig bei Leerfahrten oder Fahrten mit Teilbeladung. Allerdings führt die reduzierte Anzahl automatisch schaltbarer Gänge zu einer schlechteren Anpassung an den wirtschaftlichen Bereich des Motors.

Es ist ferner bekannt, ATZ 85 (1983) 6, S. 393 ff, daß eine Mikroprozessorelektronik nach einem vorgegebenen Rechenprogramm den zu schaltenden Gang bestimmt. Wird in einem Schaltkennfeld eine Hoch- oder Rückschaltkennlinie erreicht, löst die Elektronik einen entsprechenden Schaltvorgang aus. Während des Schaltvorgangs wird das Drehmoment des Motors reduziert, um die Reibelemente geringer zu belasten und den Schaltkomfort zu verbessern. Für verschiedene Fahrsituationen sind mehrere Programme vorgesehen, die verschiedene Schaltkennfelder haben. Dabei kann zwischen den einzelnen Schaltkennfeldern automatisch gewechselt werden. Ferner ist es möglich, die Schaltkennlinien in Abhängigkeit von Betriebsparametern zu adaptieren.

Für Nutzkraftfahrzeuge werden häufig vielstufige Schaltgetriebe verwendet, die mit einer Zugkraftunterbrechung geschaltet werden. Es ist eine Steuereinrichtung zum selbsttätigen Schalten von vielgängigen Stufenwechselgetrieben bekannt, EP 0 255 519 B1, bei der Schaltpunkte in Abhängigkeit von der Fahrzeuggeschwindigkeit, der Momentanforderung (Gashebelstellung) und der aus den Drehzahlen der Getriebeabtriebswelle ermittelten Beschleunigung festgelegt werden. Die Beschleunigung ist in sechs Bereiche eingeteilt, und zwar in eine starke Verzögerung, eine geringe Verzögerung, eine konstante Fahrt, eine geringe Beschleunigung, eine mittlere Beschleunigung und eine große Beschleunigung. Rechnerisch wird die Verzögerung als negative Beschleunigung betrachtet.

Ferner ist die Gaspedalstellung in drei Bereiche eingeteilt, und zwar in einen Leergasbereich, eine Mittelstellung und einen Vollgasbereich. Zu jedem Bereich der Gaspedalstellung ist ein Beschleunigungsbereich zugeordnet, so daß sich unter diesen Voraussetzungen achtzehn Schaltpunkte ergeben. Die Schaltbedingungen für die Schaltpunkte werden in Tabellen festgehalten, wobei die Werte empirisch oder rechnerisch ermittelt werden. Je nach der Anzahl der verwendeten Fahrprogramme sind mehrere Tabellen erforderlich. Die für die Getriebeschaltung erforderlichen Kennfelder und Tabellen müssen an jeden Fahrzeugtyp und Antriebsstrang angepaßt werden. Dies ist mit einem erheblichen Aufwand verbunden, da nicht selten mehr als 3000 Daten abgeglichen werden müssen. Ferner sind die Übergänge zwischen den vielen unstetig gestuften Schaltbedingungen kritisch, da leicht Interaktionen entstehen können, was sich sehr ungünstig auf die Fahrbarkeit des Fahrzeugs auswirkt.

Der Erfindung liegt die Aufgabe zugrunde, eine Einrichtung für die Auswahl der Getriebeübersetzungen zu schaffen, die für verschiedene, automatisch verstellbare Getriebe einheitlich anwendbar ist und weniger Abstimmungsparameter verlangt. Sie wird mit den Merkmalen des ersten Patentanspruchs gelöst.

Die Erfindung ist für alle Fahrzeuge mit einem volloder teilautomatisierten Antriebsstrang, bestehend aus einem Motor mit oder ohne Anfahrelement, z. B. eine Kupplung und/oder einen Wandler, aus einem Getriebe mit verschiedenen Übersetzungen und einer Antriebsachse mit Fahrzeugrädern geeignet. Dabei kann das Getriebe sowohl ein stufenloses Getriebe, als auch ein gestuftes Getriebe sein, das mit Zugkrafunterbrechung oder unter Last geschaltet wird.

Für jede Übersetzung bzw. für jeden Übersetzungsbereich ist eine Mindestverweilzeit vorgegeben, während der die Übersetzung nicht verstellt wird, es sei denn, die Fahrzeugbeschleunigung ist so groß, daß während dieser Zeit eine obere oder untere Schaltgrenzdrehzahl erreicht wird.

Ferner ist eine adaptiv anpaßbare Verstellzeit, Schaltzeit, vorgegeben, die durchschnittlich erforderlich ist, um das Getriebe von einer Übersetzung zu einer anderen Übersetzung zu verstellen. Unter Berücksichtigung der Fahrzeugbeschleunigung wird aus der Mindestverweilzeit und der Verstellzeit eine zugehörige Drehzahländerung des Motors errechnet, aus der eine Solldrehzahländerung bestimmt wird. Schließlich wird eine Schaltdrehzahl als Funktion der Solldrehzahländerung, einer minimalen bzw. maximalen und einer ökonomisch optimalen Betriebsdrehzahl eines Motors berechnet. Die Schaltdrehzahl liegt im Motorkennfeld zwischen einem ökonomischen Betriebsbereich und einer unteren bzw. oberen Drehzahlgrenze des Motors. Das Verhältnis der optimalen Betriebsdrehzahl zur Schaltdrehzahl ist gleich dem Verhältnis der Sollübersetzung zur Istübersetzung. Der Übersetzungssprung bzw. die neue Übersetzung wird geschaltet, um den Betriebspunkt des Motors bei möglichst gleicher Leistung in den ökonomischen Bereich zurückzuführen, und zwar sobald die Istdrehzahl die Schaltdrehzahl erreicht oder überschreitet.

Da die wesentlichen Einflußparameter durch Rechenregeln miteinander verknüpft sind, ergeben sich lückenlose, eindeutige Auswerteergebnisse, wobei sich die Anzahl der abzustimmenden Parameter etwa um den Faktor 10 verringert. Es ist zweckmäßig, die Mindestverweilzeit entsprechend unterschiedlicher Fahrzustände mit vorgegebenen Faktoren zu multiplizieren. Z. B. kann die Mindestverweilzeit bei einer Kick-down-Rückschaltung mit dem Faktor 1,4 und bei einer Schubrückschaltung mit dem Faktor 0,2 multipliziert werden. Diese Faktoren gelten nicht allgemein, sondern müssen auf den jeweiligen Fahrzeugtyp empirisch abgestimmt werden oder adaptiv nach einem Optimierungskriterium.

Ist der Übersetzungssprung bestimmt, wird geschaltet, sobald die Istdrehzahl die ermittelte Schaltdrehzahl erreicht oder überschreitet, und zwar nach unten bezüglich einer Rückschaltung und nach oben, wenn hochgeschaltet werden soll. Dabei ist zu berücksichtigen, daß die minimale und maximale Betriebsdrehzahl des Motors noch nicht erreicht ist und der Motor im neuen Betriebspunkt eine für die Beschleunigung des Fahrzeugs ausreichende Überschußkraft hat. Ist die Beschleunigung so groß, daß eine maximale oder minimale Betriebsdrehzahl erreicht wird, wird sofort hoch- bzw. zurückgeschaltet. Aus Sicherheitsgründen ist es zweckmäßig, einen Sicherheitsabstand von den maximalen bzw. minimalen Betriebsdrehzahlen einzuhalten.

Nähere Einzelheiten und Vorteile werden nachfolgend anhand der Zeichnung beschrieben.

In der Beschreibung und in den Ansprüchen sind zahlreiche Merkmale im Zusammenhang dargestellt und beschrieben. Der Fachmann wird die Merkmale zweckmäßigerweise auch einzeln betrachten und zu weiteren sinnvollen Kombinationen zusammenfassen.

In der Zeichnung sind Ausführungsbeispiele der Erfindung dargestellt.

Es zeigen:

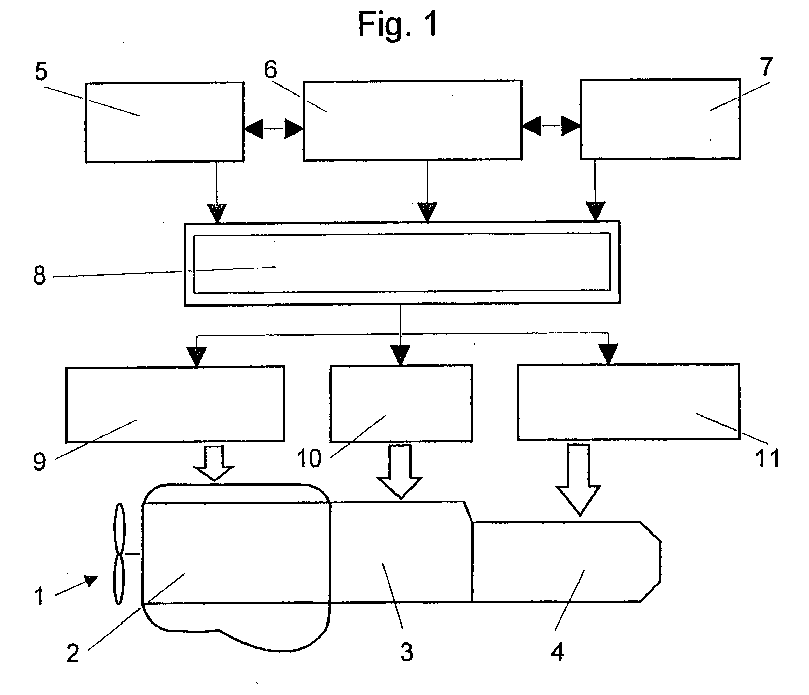

Fig. 1    ein Schema einer Antriebsstrangregelung,

Fig. 2    ein Motorkennfeld,

Fig. 3    ein Schaubild über Mindestverweilzeiten und Drehzahländerungen in verschiedenen Übersetzungsstufen,

Fig. 4    ein Schaubild über Schaltzeiten,

Fig. 5    ein Motorkennfeld mit einer Zughochschaltung und

Fig. 6    ein Motorkennfeld mit einer Zugrückschaltung.

Ein Antriebsstrang 1 weist einen Motor 2, ein Anfahrlement, z. B. eine Kupplung bzw. einen Wandler 3 und ein Getriebe 4 auf. Das Getriebe 4 kann ein stufenloses oder ein gestuftes sein, das mit Zugkraftunterbrechung und/oder unter Last geschaltet wird. Ein Mikroprozessor 8 regelt die Antriebseinheiten 2, 3 und 4 des Antriebsstrangs 1 abhängig von Betriebsparametern 5, Antriebsparametern 6 und Fahrzeugparametern 7 und erzeugt nach vorgegebenen Rechenregeln, Kenngrößen und Kennfeldern Ausgangssignale für Stellglieder 9 des Motors 2, für Stellglieder 10 der Kupplung 3 und Stellglieder 11 des Getriebes 4. Zu den Betriebsparametern 5 gehören z. B. die Position eines Fahrpedals, in der Regel eines Gaspedals, deren Veränderung während einer Zeitspanne sowie die Beschleunigung der Fahrpedalbetätigung und Brems- und Lenksignale. Zu den Antriebsparametern 6 gehören die Position eines Kraftstoffzumeßorgans oder ein Lastsignal, eine Motordrehzahl, eine Zündwinkeleinstellung, eine Temperatur, z. B. Kühlmitteltemperatur, Aggregattemperatur, usw. Zu den Fahrzeug- und Getriebeparametern 7 gehören eine Position des Wählhebels bzw. einer Verstell- oder Schalteinrichtung des Getriebes 4, eine Fahrgeschwindigkeit oder eine mit dieser zusammenhängende Drehzahl im Antriebsstrang, Längs- und Querbeschleunigungen, Beladungszustände, Fahrwiderstände und Temperaturen.

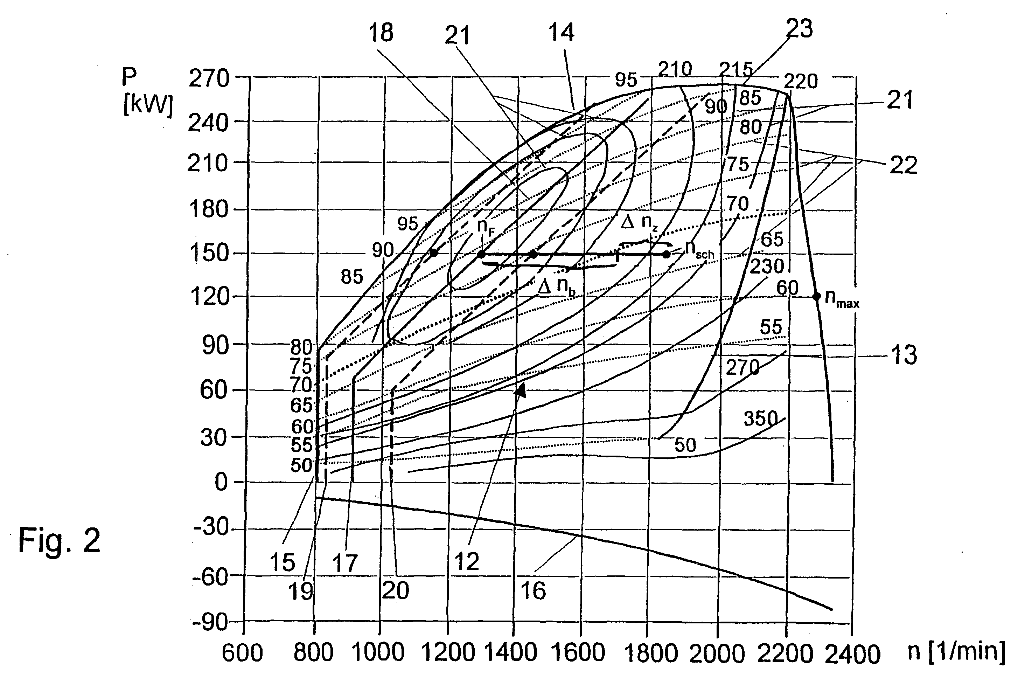

In Fig. 2 ist ein Kennfeld eines Motors 2 dargestellt, und zwar eines Dieselmotors. Über der Motordrehzahl n ist die Motorleistung P in kW aufgetragen. Selbstverständlich können auch Motoren mit anderen Brennverfahren und Kennfeldern verwendet werden.

Ein Betriebsbereich 12 des Motors 2 ist nach rechts begrenzt durch eine Linie 13 der maximalen Betriebsdrehzahl, nach oben durch eine Linie 14 der maximalen Leistung, nach links durch eine Linie 15 der minimalen Betriebsdrehzahl, die z. B. der Leerlaufdrehzahl oder einer unteren Rundlaufdrehzahl des Motors 2 entspricht, und nach unten durch eine Schubleistungslinie 16. Ferner sind in das Schaubild Linien 21 eingetragen, die Punkte mit einem gleichen spezifischen Kraftstoffverbrauch verbinden. Die Zahlen an den Linien 21 geben den Kraftstoffverbrauch in g/kWh an.

Punktierte Linien 22 kennzeichnen Punkte gleicher Fahrpedalstellung oder einer Stellung eines Kraftstoffzumeßorgans,. das mit dem Fahrpedal verbunden ist. Die Zahlen an der Kurvenschar 22 geben den Prozentsatz bezogen auf die maximale Stellung des Fahrpedals an. Die Linien 13 bis 22 werden aus Meßwerten des Motorenherstellers berechnet und sind in einem Speicher des Mikroprozessor 8 gespeichert. In dem Speicher sind ferner Fahrzeugdaten, z. B. das Gewicht (Masse m), die Getriebeübersetzungen $i_g$, Getriebewirkungsgrade, Mindestverweilzeiten $\Delta t_F$ und Schaltzeiten $\Delta t_z$ gespeichert.

In das Kennfeld ist ferner ein ökonomischer Fahrbereich 18 mit einer Fahrlinie 17, einer unteren Begrenzung 19 und einer oberen Begrenzung 20 eingezeichnet. Die Fahrlinie 17 verbindet Betriebspunkte mit minimalem spezifischen Kraftstoffverbrauch. Im allgemeinen ist man bestrebt, den Motor bei den unterschiedlichen Fahrbedingungen in der Nähe der Fahrlinie 17 innerhalb des Fahrbereichs 18 zu betreiben. In vielen Situationen ist jedoch der Verbrauch gegenüber der Fahrbarkeit von untergeordneter Bedeutung, z. B. im Kick-down- oder Bremsbetrieb. Hier steht eine maximale Antriebs- bzw. Bremsleistung im Vordergrund. Besonders wenn primäre Bremsen eingesetzt werden, ist die Motordrehzahl n für die Bremsleistung von entscheidender Bedeutung. Im übrigen wird folgende Fahrstrategie angewendet:

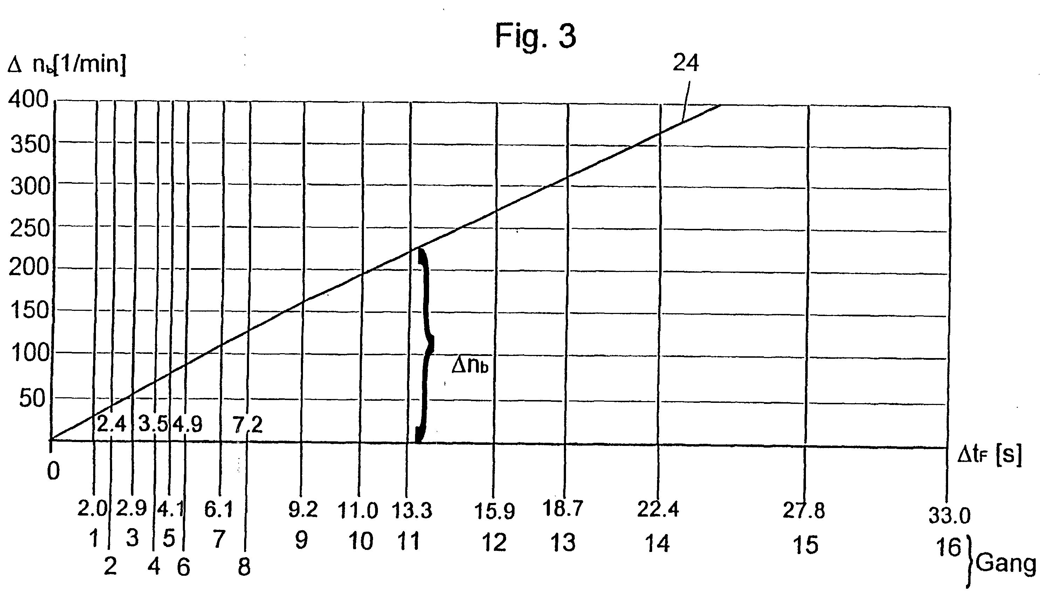

Zunächst werden für jede Übersetzung ig Mindestverweilzeiten $\Delta t_F$ festgelegt. Fig. 3 zeigt beispielhaft Mindestverweilzeiten $\Delta t_F$ für ein 16-Ganggetriebe in Sekunden. Die angestrebten Mindestverweilzeiten $\Delta t_z$ nehmen vom kleinsten Gang 1 mit der größten Übersetzung $i_g$ bis zum höchsten Gang 16 mit der kleinsten Übersetzung $i_g$ zu. In das Diagramm nach Fig. 3 ist eine willkürliche Beschleunigungslinie 24 des Fahrzeugs eingetragen. Wird das Fahrzeug mit dieser Beschleunigung betrieben, wird während der zugeordneten Mindestverweilzeit $\Delta t_F$ eine bestimmte Drehzahldifferenz $\Delta n_b$ des Motors 2 erreicht.

Wird das Getriebe 4 von einer Übersetzung $i_g$ in eine andere geschaltet, wird hierfür eine Schaltzeit $\Delta t_z$ benötigt. Die Schaltzeit $\Delta t_z$ hängt bis zu einem gewissen Maß von dem Übersetzungssprung $\Delta i$ ab, der geschaltet werden soll.

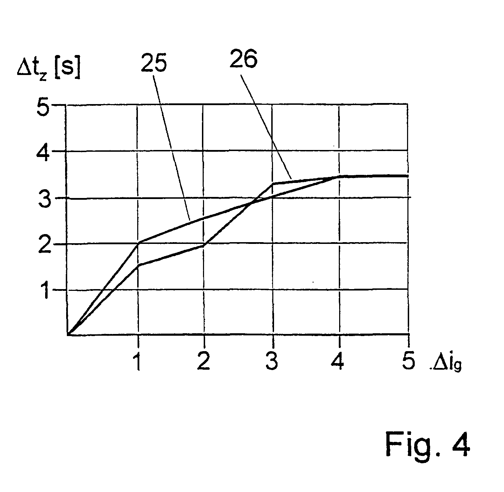

Fig. 4 enthält Schaltzeiten $\Delta t_z$ für Übersetzungssprünge bis zu vier Gänge bei einem 16-Gangschaltgetriebe 4. Für größere Übersetzungssprünge $\Delta i$, die relativ selten vorkommen, nimmt die Schaltzeit $\Delta t_z$ nicht mehr zu. Ferner unterscheiden sich die Schaltzeiten $\Delta t_z$ für das Hochschalten, die durch die Linie 26 gekennzeichnet sind, von den Schaltzeiten $\Delta t_z$ für das Zurückschalten nach der Linie 25 gekennzeichnet sind.

Um die Beschleunigung des Fahrzeugs zu erfassen wird die Geschwindigkeitsänderung oder eine mit dieser zusammenhängende Drehzahländerung im Antriebsstrang gemessen und aus zwei aufeinanderfolgenden Messungen die Beschleunigung a errechnet. Um sicher zu sein, daß eine positive oder eine negative Beschleunigung a vorliegt, werden eventuell kleine Beschleunigungswerte um Null als Null definiert, d.h. das Fahrzeug bewegt sich in diesem Bereich mit annähernd konstanter Geschwindigkeit. Liegt in einem solchen Fall der Betriebspunkt des Motors 2 im ökonomischen Bereich 18 des Kennfelds, wird nicht geschaltet. Stellt der Mikroprozessor 8 jedoch eine deutlich von Null abweichende Beschleunigung a fest, berechnet er daraus mit der jeweiligen Mindestverweilzeit $\Delta t_F$ eine Drehzahldifferenz

$$\Delta n_b = i_g/r_{dyn} * \Delta t_F * a * 60/2\pi,$$

wobei $i_g$ die Gesamtübersetzung in dem jeweiligen Gang und $r_{dyn}$ der dynamische Halbmesser eines angetriebenen Fahrzeugrads ist. Da das Fahrzeug auch während der Schaltung seine Geschwindigkeit verändert und damit die Motordrehzahl für den neu zu schaltenden Gang entsprechend angepaßt werden muß, errechnet der Mikroprozessor 8 aus der Schaltzeit $\Delta t_z$ und der während dieser Zeit wirksamen Beschleunigung a eine zusätzliche Drehzahldifferenz $\Delta n_z$.

Bei Getrieben 4, die mit Zugkraftunterbrechung geschaltet werden, wirkt während dieser Zeit der Fahrwiderstand auf das Fahrzeug. Die Drehzahldifferenz $\Delta n_z$ ist

$$\Delta n_Z = F_W/m * i_g/r_{dyn} * \Delta t_Z * 60/ (2 * \pi).$$

In Abhängigkeit von den Betriebs-, Antriebs- und Fahrparametern 5, 6, 7 ermittelt der Mikroprozessor 8 periodisch den Istbetriebszustand und die Lage des Betriebspunktes im Motorkennfeld. Liegt der Betriebspunkt bei Normalfahrt innerhalb des ökonomischen Fahrbereichs 18, ist keine Schaltung erforderlich. Liegt der gegenwärtige Betriebspunkt außerhalb dieses Fahrbereiches 18, ermittelt der Mikroprozessor eine Schaltdrehzahl $n_{sch}$. Bei dieser wird das Getriebe 4 hoch- oder zurückgeschaltet je nach dem, ob der Schaltpunkt auf einer Linie konstanter Leistung rechts oder links von der Fahrlinie 17 liegt.

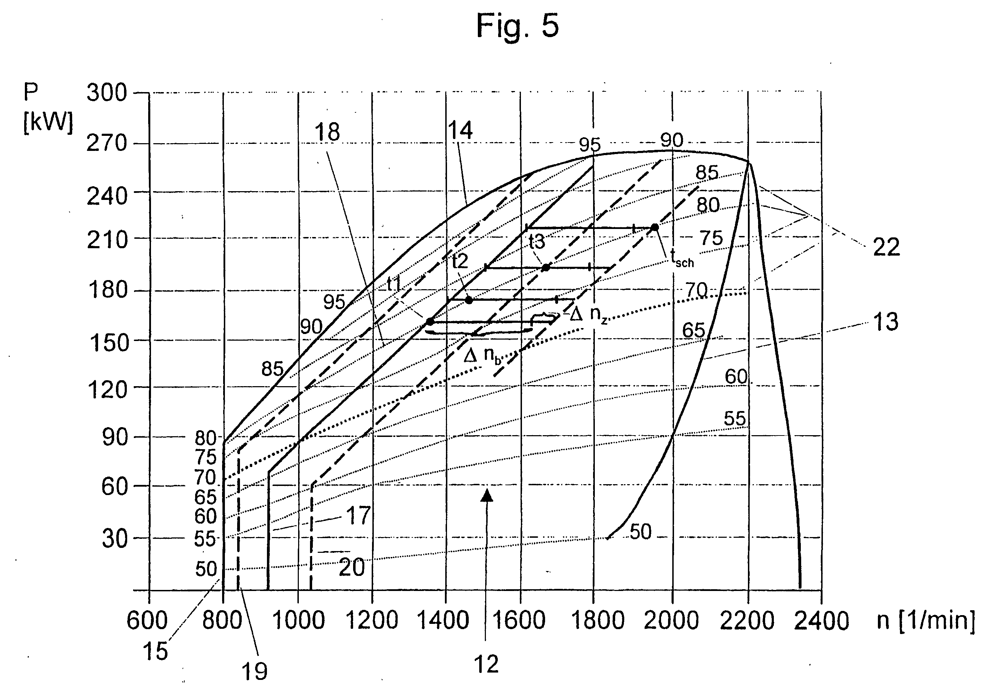

Fig. 5 zeigt eine Hochschaltung, wenn das Fahrzeug in der Ebene beschleunigt. Zum Zeitpunkt $t_1$ liegt der Betriebspunkt des Fahrzeugs bei einer Gaspedalstellung von 80% auf der Fahrlinie 17. In der Folge der Beschleunigung a findet sich zum Zeitpunkt $t_2$ der Betriebspunkt bei einer höheren Motordrehzahl, die sich zum Zeitpunkt $t_3$ weiter erhöht hat, wobei die Linie der Gaspedalstellung von 80% die obere Begrenzung 20 des ökonomischen Fahrbereichs 18 schneidet.

Ausgehend von der Drehzahl $n_F$ auf der Fahrlinie 17 wird die Schaltdrehzahl $n_{sch}$ ermittelt, indem zur Drehzahl $n_F$ auf der Fahrlinie 17 die Differenz der Drehzahldifferenzen $\Delta n_b$ und $\Delta n_z$ hinzugezählt wird

$$n_{sch} = n_F + (\Delta n_b - \Delta n_Z)$$

Da sich bei einer Zugkraftunterbrechung die Fahrgeschwindigkeit und damit die Motordrehzahl n um die Drehzahldifferenz $\Delta n_z$ ändert, soll bei der Schaltung nur die Drehzahldifferenz $\Delta n_b$ ausgeglichen werden.

Daraus ergibt sich eine Sollübersetzung zu

$$i_{soll} = i_{ist} * n_F/(n_{sch} + \Delta n_Z)$$

Zu der errechneten Sollübersetzung $i_{soll}$ wird eine passende Übersetzung $i_g$ gewählt, die geschaltet wird, sobald die Istdrehzahl $n_{ist}$ größer oder gleich wie die zuvor ermittelte Schaltdrehzahl $n_{sch}$ ist.

Anschließend wird der Motor 2 entsprechend seiner Kennfeldcharakteristik auf den neuen Lastbetriebspunkt eingestellt, wobei die neue Motorlaststellung ungefähr gleich der bisherigen, multipliziert mit dem Verhältnis der bisherigen Übersetzung $i_{ist}$ zur Sollübersetzung $i_{soll}$ ist, sofern eine elektronische Motorlastregelung vorhanden ist.

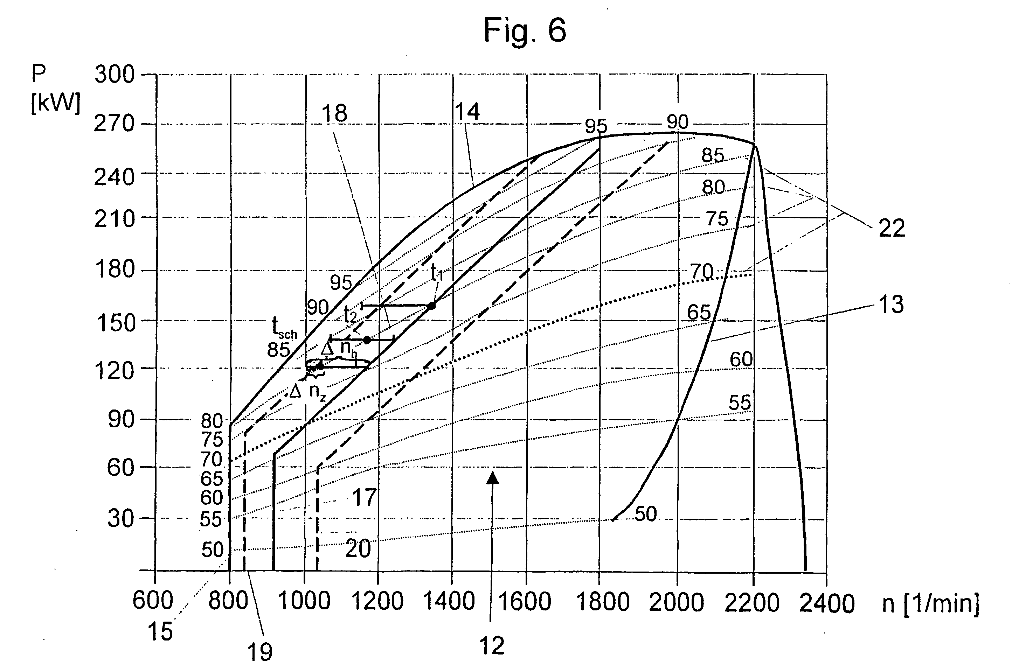

Fig. 6 zeigt eine Zugrückschaltung. Sie findet statt, wenn sich die Fahrzeuggeschwindigkeit im Zugbetrieb des Motors 2 verkleinert, z. B. wenn das Fahrzeug bergauf fährt. In diesem Fall wird die Beschleunigung a negativ, so daß die daraus resultierende Drehzahldifferenz $\Delta n_b$ des Motors 2 ebenfalls negativ wird und damit sowohl $\Delta n_b$ als auch $\Delta n_z$ negativ sind. Die Differenz der beiden Werte wird also, da negativ, von $n_F$ abgezogen und ergibt $n_{sch}$. Daraus folgt, daß der zu schaltende Übersetzungssprung $\Delta n_b$ entsprechen muß. Es muß nun um entsprechende Gangstufen rückgeschaltet werden. Geschaltet wird allerdings erst, wenn die Istdrehzahl $n_{ist}$ die Schaltdrehzahl $n_{sch}$ erreicht, unterschreitet oder eine Grenzbedingung erreicht wird.

Im Schubbetrieb, wenn das Antriebsmoment des Motors 2 negativ ist, also bremst, wird bei steigender Geschwindigkeit wie im Normalbetrieb hochgeschaltet. Ist jedoch ein Bremssignal aktiv, wird erst geschaltet, wenn die Istdrehzahl $n_{ist}$ größer oder gleich wie die maximale Motordrehzahl $n_{max}$ ist, und zwar wird nur um eine Gangstufe hochgeschaltet. Aus Sicherheitsgründen wird zweckmäßigerweise ein Sicherheitsabstand von der maximalen Motordrehzahl $n_{max}$ eingehalten.

Sind bei steigender Geschwindigkeit zwei Bremssignale aktiv, z. B. das Signal einer Betriebsbremse und einer Motorbremse und/oder eines Retarders, wird nicht hochgeschaltet. Diese Situation entspricht einer Notsituation, d. h. trotz mehrerer, aktiver Bremsen wird das Fahrzeug schneller. Daher wird nicht hochgeschaltet, selbst wenn der Motor 2 beschädigt wird.

Im Schubbetrieb wird bei Verzögerung im allgemeinen wie im Normalbetrieb zurückgeschaltet. Sind ein oder mehrere Bremssignale aktiv, wird wie im Kick-down-Fahrzustand zurückgeschaltet, um eine möglichst gute Bremsleistung durch eine hohe Motordrehzahl zu erhalten. Wenn das Fahrzeug eine Mindestgeschwindigkeit unterschreitet, wird das Anfahrelement aktiviert.

Wenn der Fahrer einen Kick-down-Schalter am Gaspedal betätigt, oder wenn das Lastsignal einen Grenzwert überschreitet, beginnt der Kick-down-Fahrzustand. Der Fahrer wünscht dann die größtmögliche Fahrleistung ab sofort, d. h. große Beschleunigung, höchste Fahrgeschwindigkeit, Schalten über mehrere Gänge, nicht zu häufige Schaltunterbrechungen. Der Motor 2 wird dabei auf der Vollastlinie 14 in der Nähe der Nenndrehzahl $n_{Ne}$ betrieben, ja bis in den Abregelbereich $n_{max}$, wenn keine Anschlußübersetzung mit einem ausreichenden Zugkraftüberschuß gefunden wird. Die Schaltstrategie im Kick-down-Fahrbereich ist ähnlich wie bei normaler Fahrt, jedoch wird anstelle einer Schaltdrehzahl $n_{sch}$ eine Solldrehzahldifferenz $\Delta n_{soll}$ bestimmt, die bei einer Zugrückschaltung und Vorliegen eines neuen Kick-down-Signals durch Zurückschalten erreicht werden soll, um nahe an die Nenndrehzahl $n_{Ne}$ des Motors zu kommen.

$$\Delta n_{soll} = n_{ist} - n_{Ne} + \Delta n_Z$$

Als Bezugsbasis dient hier also die Nenndrehzahl $n_{Ne}$, die um die Drehzahldifferenz $\Delta n_z$ korrigiert wird.

Aus der Gleichung

$$n_{ist} (1 - i_{soll}/i_g) \geq \Delta n_{soll}$$

kann durch ein iteratives Rechenverfahren die neue Übersetzung $i_{soll}$ ermittelt werden.

Befindet sich das Fahrzeug bereits im Kick-down-Fahrzustand und wird beschleunigt, wird als Beschleunigung a die Beschleunigung bei Nenndrehzahl $a_{Ne}$ gewählt und mit dieser Beschleunigung die Drehzahldifferenz $\Delta n_b$ (siehe oben) berechnet. Ferner wird als Fahrwiderstand der Fahrwiderstand beim Erreichen der Nenndrehzahl ermittelt, so daß sich als Drehzahldifferenz $\Delta n_z$ ergibt

$$\Delta n_Z = F_{WNe} * 1/m * i_g/r_{dyn} * \Delta t_Z * 60/(2 * \pi).$$

Die Schaltdrehzahl $n_{sch}$ wird ausgehend von der Nenndrehzahl $n_{Ne}$ berechnet:

$$n_{sch} = n_{Ne} - \Delta n_Z \leq n_{max}.$$

Hochgeschaltet wird, wenn sich für den neuen Gang im Vergleich zur Situation bei Nenndrehzahl $n_{Ne}$ eine Überschußkraft ergibt. Diese ist gleich der Differenz zwischen der Antriebskraft $F_{An}$ minus dem Fahrwiderstand $F_w$.

Im Kick-down-Fahrbetrieb wird unter Zug zurückgeschaltet, wenn das Fahrzeug verzögert, z. B. bergauf fährt. Hierbei ergibt sich als Solldrehzahldifferenz

$$\Delta n_{soll} = \Delta n_b + \Delta n_Z.$$

Die neue Übersetzung $i_{soll}$ wird wieder aus der Gleichung

$$n_{ist} * (1 - i_{soll}/i_g) \geq \Delta n_{soll}.$$

ermittelt. Der Schaltbereich ist erreicht, wenn $n_{ist} \leq n_{sch}$ ist. Die Schaltdrehzahl $n_{sch}$ wird ausgehend von der Nenndrehzahl $n_{Ne}$ unter Berücksichtigung der Drehzahldifferenzen $\Delta n_b$ und $\Delta n_Z$ ermittelt,

$$n_{sch} = n_{Ne} - \Delta n_Z + \Delta n_b.$$

Bezugszeichen

| | |
|---|---|
| 1 | Antriebsstrang |
| 2 | Motor |
| 3 | Kupplung/Wandler |
| 4 | Getriebe |
| 5 | Betriebsparameter |
| 6 | Antriebsparameter |
| 7 | Fahrzeugparameter |
| 8 | Mikroprozessor |
| 9 | Stellglieder für den Motor |
| 10 | Stellglieder für die Kupplung |
| 11 | Stellglieder für das Getriebe |
| 12 | Betriebsbereich des Motors |
| 13 | Linie der maximalen Motordrehzahl |
| 14 | Linie der maximalen Leistung |
| 15 | Linie der minimalen Motordrehzahl |
| 16 | Schubleistungslinie |
| 17 | Fahrlinie |
| 18 | ökonomischer Fahrbereich |
| 19 | untere Begrenzung des ökonomischen Fahrbereichs |
| 20 | obere Begrenzung des ökonomischen Fahrbereichs |
| 21 | Linie gleichen spezifischen Kraftstoffverbrauchs |
| 22 | Linie gleicher Fahrpedalstellung |
| 23 | Drehzahl bei Nennleistung |
| 24 | Beschleunigungslinie |
| 25 | Schaltzeitlinie für Rückschalten |
| 26 | Schaltzeitlinie für Hochschalten |

| | |
|---|---|
| a | Beschleunigung des Fahrzeugs |
| $F_{an}$ | Antriebskraft |
| $F_w$ | Fahrwiderstand |
| $F_{WNe}$ | Fahrwiderstand bei Nenndrehzahl |
| $i_g$ | Gesamtübersetzung im jeweiligen Gang |
| $i_{ist}$ | geschaltete Übersetzung (gesamt) |
| $i_{soll}$ | zu schaltende Übersetzung (gesamt) |
| m | Fahrzeugmasse |
| n | Motordrehzahl |
| $n_{ist}$ | momentane Drehzahl |
| $n_{max}$ | maximale Drehzahl |
| $n_{min}$ | minimale Drehzahl |
| $n_{Ne}$ | Nenndrehzahl |
| $n_{sch}$ | Schaltdrehzahl zu Beginn einer Schaltung |
| $\Delta n_b$ | Drehzahländerung während der Verweilzeit |
| $\Delta n_z$ | während der Schaltzeit |
| $\Delta n_{soll}$ | Solldrehzahldifferenz |
| $t_1, t_2, t_3$ | Zeitpunkt |
| $t_{sch}$ | Schaltzeitpunkt |
| $\Delta t_F$ | Verweilzeit |
| $\Delta t_z$ | Schaltzeit |

**Patentansprüche**

**1.** Einrichtung zum Auswerten von Fahrzeug-, Antriebsund Betriebsparametern (5, 6, 7) eines Fahrzeugs, um eine Übersetzung eines Getriebes (4) nach vorgegebenen Rechenregeln, Kenngrößen oder Kennfeldern mittels eines Mikroprozessors (8) auszuwählen und einzustellen, wobei aus der Änderung einer der Fahrgeschwindigkeit entsprechenden Drehzahl eines Antriebsstrangs (1) mit einem Motor (2) und dem Getriebe (4) eine Beschleunigung (a) des Fahrzeugs rechnerisch ermittelt wird, **gekennzeichnet durch** folgende Merkmale:

- jeder Übersetzung ($i_G$) ist eine Mindestverweilzeit ($\Delta t_F$) zugeordnet, während der die Übersetzung ($i_G$) nicht verstellt wird,

- jedem Übersetzungssprung ($\Delta i_G$) ist eine Verstellzeit ($\Delta t_z$) zugeordnet, die durchschnittlich erforderlich ist, um das Getriebe um einen Übersetzungssprung ($\Delta i_G$) zu verstellen,

- aus der Verweilzeit ($\Delta t_F$) und der Verstellzeit ($\Delta t_z$) werden unter Berücksichtigung der Fahrzeugbeschleunigung (a) Drehzahländerungen ($\Delta n_b$, $\Delta n_z$) des Motors (2) während dieser Zeiten errechnet,
- mit den Drehzahländerungen ($\Delta n_b$, $\Delta n_z$) wird ausgehend von einer Drehzahl ($n_F$) auf einer Fahrlinie (17) bei gleicher Leistung (P) und optimalem spezifischem Kraftstoffverbrauch eine Schaltdrehzahl ($n_{sch}$) bestimmt, die zwischen einem ökonomischen Fahrbereich (18) und den maximal bzw. minimal zulässigen Drehzahlen liegt, und
- eine Sollübersetzung ($i_{soll}$) wird aus einer Istübersetzung ($i_{ist}$), multipliziert mit dem Verhältnis der Drehzahl ($n_F$), auf der Fahrlinie (17) zur Schaltdrehzahl ($n_{sch}$) berechnet und ein möglicher Übersetzungssprung ($\Delta i_g$) ausgewählt.

2. Einrichtung nach Anspruch 1, **dadurch gekennzeichnet, daß** die Verweilzeit ($\Delta t_F$) entsprechend unterschiedlicher Fahrzustände mit vorgegebenen oder adaptiven Faktoren multipliziert wird.

3. Einrichtung nach Anspruch 2, **dadurch gekennzeichnet, daß** die Fahrzustände Kick-down-Hochschalten, Kick-down-Rückschalten, Last-Hochschalten, Last-Rückschalten, Schub-Hochschalten, Schub-Rückschalten und Schalten mit Bremsbetätigung sind.

4. Einrichtung nach einem der vorangehenden Ansprüche, **dadurch gekennzeichnet, daß** der ausgewählte Übersetzungssprung ($\Delta i_G$) geschaltet wird, wenn die Istdrehzahl ($n_{ist}$) die ermittelte Schaltdrehzahl ($n_{sch}$) überschreitet oder die minimale oder maximale Betriebsdrehzahl erreicht.

5. Einrichtung nach einem der vorangehenden Ansprüche, **dadurch gekennzeichnet, daß** die Auswahl der Sollübersetzung ($i_{soll}$) erst gestartet wird, wenn der Motorbetriebspunkt nicht mehr innerhalb des ökonomischen Fahrbereichs (18) liegt.

6. Einrichtung nach einem der vorangehenden Ansprüche, **dadurch gekennzeichnet, daß** im Schubbetrieb nicht hochgeschaltet wird, wenn mehrere Bremssignale aktiv sind.

7. Einrichtung nach einem der vorangehenden Ansprüche, **dadurch gekennzeichnet, daß** im Schubbetrieb zurückgeschaltet wird, wenn mehrere Bremssignale aktiv sind und die Drehzahl des Motors (2) kleiner der Nenndrehzahl ($n_{Ne}$) des Motors ist, es sei denn, der Motor läßt eine überhöhte Schubdrehzahl zu.

8. Einrichtung nach einem der vorangehenden Ansprüche, **dadurch gekennzeichnet, daß** eine Solldrehzahldifferenz ($\Delta n_{soll}$) aus der Istdrehzahl ($n_{ist}$) und der Nenndrehzahl ($n_{Ne}$) unter Berücksichtigung der Drehzahländerung ($\Delta n_z$) während der Schaltzeit ($\Delta t_z$) gebildet und die neue Übersetzung ($i_{soll}$) aus der Beziehung $n_{ist} * (1 - i_{soll}/i_g) \geq \Delta n_{soll}$ berechnet wird, sobald ein Kickdownschalter zu Beginn eines Kick-down-Fahrzustands betätigt wird oder ein entsprechendes Lastsignal ansteht und die Istdrehzahl ($n_{ist}$) kleiner als die Nenndrehzahl ($n_{Ne}$) ist.

9. Einrichtung nach einem der vorangehenden Ansprüche, **dadurch gekennzeichnet, daß** bei einer Beschleunigung (a) größer als Null und einer Istdrehzahl ($n_{ist}$) größer oder gleich wie die Nenndrehzahl ($n_{Ne}$) als Beschleunigungswert die Beschleunigung bei der Nenndrehzahl ($n_{Ne}$) gespeichert und die Schaltdrehzahl ($n_{sch}$) auf die Nenndrehzahl ($n_{Ne}$) bezogen wird.

**Claims**

1. System for evaluating vehicle, drive and operating parameters (5, 6, 7) of a vehicle in order to select and set a transmission ratio of a transmission (4) according to predetermined computational rules, characteristics or characteristic diagrams by means of a microprocessor (8), wherein an acceleration (a) of the vehicle is established by computation from the change in a speed, corresponding to the driving speed, of a drive train (1) with an engine (2) and the transmission (4), **characterised by** the following features:

- a minimum dwell time ($\Delta t_F$), during which the transmission ratio ($i_G$) is not adjusted, is associated with each transmission ratio ($i_G$),
- an adjustment time ($\Delta t_z$), which is normally required, is associated with each transmission ratio step change ($\Delta i_G$) in order to adjust the transmission by a transmission ratio step change ($\Delta i_G$),
- speed changes ($\Delta n_b$, $\Delta n_z$) of the engine (2) during the dwell time ($\Delta t_F$) and the adjustment time ($\Delta t_z$) are calculated from these times, taking account of the vehicle acceleration (a),
- starting out from a speed ($n_F$) on a driving line (17) with constant power (P) and optimum specific fuel consumption, a shift speed ($n_{sch}$) is determined with the speed changes ($\Delta n_b$, $\Delta n_z$) which lies between an economical driving range (18) and the maximum and minimum permissible speeds, and
- a desired transmission ratio ($i_{soll}$) is calculated from an actual transmission ratio ($i_{ist}$), multiplied by the ratio of the speed ($n_F$), on the driving line (17) to the shift speed ($n_{sch}$), and a possible transmission ratio step change ($\Delta i_g$) is selected.

2. System according to Claim 1, **characterised in that** the dwell time ($\Delta t_F$) is multiplied by predetermined or adaptive factors according to different driving states.

3. System according to Claim 2, **characterised in that** the driving states are kickdown shift-up, kickdown shift-down, shift-up under load, shift-down under load, shift-up in overrun, shift-down in overrun and shift with brake operation.

4. System according to any one of the preceding Claims, **characterised in that** the selected transmission ratio step change ($\Delta i_G$) is effected if the actual speed ($n_{ist}$) exceeds the established shift speed ($n_{sch}$) or reaches the minimum or maximum operating speed.

5. System according to any one of the preceding Claims, **characterised in that** the selection of the desired transmission ratio ($i_{soll}$) is only started if the engine operating point no longer lies within the economical driving range (18).

6. System according to any one of the preceding Claims, **characterised in that** no shift-up takes place in overrun if a plurality of brake signals are active.

7. System according to any one of the preceding Claims, **characterised in that** a shift-down takes place in overrun if a plurality of brake signals are active and the speed of the engine (2) is lower than the nominal speed ($n_{Ne}$) of the engine, unless the engine permits an excessive overrun speed.

8. System according to any one of the preceding Claims, **characterised in that** a desired speed difference ($\Delta n_{soll}$) is formed from the actual speed ($n_{ist}$) and the nominal speed ($n_{Ne}$), taking account of the speed change ($\Delta t_z$) during the shift time ($\Delta t_z$), and the new transmission ratio ($i_{soll}$) is calculated from the relationship $n_{ist} * (1 - i_{soll}/i_g) \geq \Delta n_{soll}$ as soon as a kickdown switch is operated at the beginning of a kickdown driving state or a corresponding load signal occurs and the actual speed ($n_{ist}$) is lower than the nominal speed ($n_{Ne}$).

9. System according to any one of the preceding Claims, **characterised in that**, when the acceleration (a) is greater than zero and the actual speed ($n_{ist}$) is greater than or equal to the nominal speed ($n_{Ne}$), the acceleration at the nominal speed ($n_{Ne}$) is stored as acceleration value and the shift speed

($n_{sch}$) is related to the nominal speed ($n_{Ne}$).

**Revendications**

1. Dispositif pour analyser des paramètres d'entraînement et de fonctionnement (5, 6, 7) d'un véhicule, afin de sélectionner et d'enclencher un rapport de transmission d'une transmission (4) d'après des règles de calcul, caractéristiques ou diagrammes caractéristiques prédéterminés au moyen d'un microprocesseur (8), dans lequel, à partir d'une variation d'une vitesse de rotation, correspondant à la vitesse de marche, d'une chaîne cinématique (1) qui comprend un moteur (2) et la transmission (4), on obtient par calcul une accélération (a) du véhicule, **caractérisé par** les caractéristiques suivantes :

   - à chaque rapport de transmission ($i_G$) est associé un temps de séjour minimum ($\Delta t_F$) pendant lequel le rapport ($i_G$) n'est pas modifié,
   - à chaque saut de rapport ($\Delta i_G$), est associé un temps de changement ($\Delta t_z$) qui est nécessaire en moyenne pour changer la transmission d'un saut de rapport ($\Delta i_G$),
   - à partir du temps de séjour ($\Delta t_F$) et du temps de changement ($\Delta t_z$), et en tenant compte de l'accélération (a) du véhicule, sont calculées des variations de la vitesse de rotation ($\Delta n_b$, ($\Delta n_z$) du moteur (2) exécutées pendant ces temps,
   - avec les variations de la vitesse de rotation ($\Delta n_b$, $\Delta n_z$), en partant d'une vitesse de rotation ($n_F$) sur une ligne de conduite (17), à égalité de puissance (P) et avec une consommation de carburant spécifique optimale, est déterminée une vitesse de rotation de changement ($n_{sch}$) qui se trouve entre un régime de conduite économique (18) et les vitesses de rotation maximale et minimale admissibles, et
   - un rapport de transmission de consigne ($i_{soll}$) est calculé à partir d'un rapport de transmission réel ($i_{ist}$), multiplié par le rapport liant la vitesse de rotation ($n_F$), sur la ligne de conduite (17) à la vitesse de rotation de changement ($n_{sch}$) et un saut de rapport possible ($\Delta i_g$) est sélectionné.

2. Dispositif selon la revendication 1, **caractérisé en ce que** le temps de séjour ($\Delta t_F$) correspondant à différents états de conduite est multiplié par des facteurs prédéterminés ou adaptatifs.

3. Dispositif selon la revendication 2, **caractérisé en ce que** les états de conduite sont le changement en montée avec kick-down, la rétrogradation avec kick-down, le changement en montée sous charge, la rétrogradation sous charge, le changement en montée en poussée, la rétrogradation en poussée et le changement avec actionnement du frein.

4. Dispositif selon l'une des revendications précédentes, **caractérisé en ce que** le saut de rapport de transmission ($\Delta i_G$) sélectionné est déclenché lorsque la vitesse de rotation réelle ($n_{ist}$) devient supérieure à la vitesse de rotation de changement calculée ($n_{sch}$) ou atteint la vitesse de rotation de régime minimale ou maximale.

5. Dispositif selon l'une des revendications précédentes, **caractérisé en ce que** la sélection du rapport de transmission de consigne ($i_{soll}$) n'est démarrée que lorsque le point de fonctionnement du moteur ne se trouve plus dans les limites du régime de conduite économique (18).

6. Dispositif selon l'une des revendications précédentes, **caractérisé en ce qu'**il ne se produit pas de changement en montée dans le fonctionnement en poussée lorsque plusieurs signaux de freinage sont actifs.

7. Dispositif selon l'une des revendications précédentes, **caractérisé en ce qu'**il se produit une rétrogradation dans le fonctionnement en poussée lorsque plusieurs signaux de freinage sont actifs et que la vitesse de rotation du moteur (2) est plus petite que la vitesse de rotation nominale ($n_{Ne}$) du moteur, même si le moteur admet une vitesse de rotation en poussée excessivement élevée.

8. Dispositif selon l'une des revendications précédentes, **caractérisé en ce qu'**une différence de vitesse de rotation de consigne ($\Delta n_{soll}$) est formée à partir de la vitesse de rotation réelle ($n_{ist}$) et de la vitesse de rotation nominale ($n_{Ne}$) en tenant compte de la variation de la vitesse de rotation ($\Delta n_z$) pendant le temps de changement ($\Delta t_z$) et le nouveau rapport de transmission ($i_{soll}$) est calculé à partir de la relation $n_{ist} * (1 - i_{soll}/i_g) \geq \Delta n_{soll}$ dès qu'un interrupteur de kick-down est actionné au début d'un état de conduite avec kick-down ou qu'un signal de charge correspondant est présent et que la vitesse de rotation réelle ($n_{ist}$) plus petite que la vitesse de rotation nominale ($n_{Ne}$).

9. Dispositif selon l'une des revendications précédentes, **caractérisé en ce que**, en présence d'une accélération (a) supérieure à zéro et d'une vitesse de rotation réelle ($n_{ist}$) supérieure ou égale à la vitesse de rotation nominale ($n_{Ne}$), l'accélération à la vitesse de rotation nominale ($n_{Ne}$) est mémorisée en tant que valeur d'accélération et la vitesse de rotation de changement ($n_{sch}$) est rapportée à la vitesse de rotation nominale ($n_{Ne}$).

# Fig. 1

EP 0 956 468 B1

Fig. 2

Fig. 3

EP 0 956 468 B1

Fig. 4

Fig. 5

EP 0 956 468 B1

Fig. 6

EP 0 956 468 B1